# EUROPEAN PATENT SPECIFICATION

(11) **EP 1 224 090 B1**
(45) Date of publication and mention of the grant of the patent: **16.06.2004**
(21) Application number: 99953129.6
(22) Date of filing: 12.10.1999
(51) Int. Cl.: B60K 17/30

(54) **STEERABLE DRIVE AXLE WITH ELECTRICALLY-POWERED STEERING APPARATUS**
LENKBARE ANTRIEBSACHSE MIT ELEKTRISCH ANGETRIEBENER LENK-EINRICHTUNG
ESSIEU MOTEUR DIRECTEUR DOTE D'UN APPAREIL DE DIRECTION A ALIMENTATION ELECTRIQUE

(43) Date of publication of application: 24.07.2002
(73) Proprietor: Delphi Technologies, Inc., Troy, MI 48007 (US)
(72) Inventor: KIELAR, Stanley, John, Saginaw, MI 48603 (US); WESTERCAMP, Kenneth, Lee, Frankenmuth, MI 48734 (US); BAUER, Chad, David, Saginaw, MI 48602 (US)
(74) Representative: Denton, Michael John
(86) International application number: PCT/US1999/023624
(87) International publication number: WO 2001/026950

(56) References cited:
- US-A- 4 592 440
- US-A- 4 765 425
- US-A- 6 039 143

## Description

### TECHNICAL FIELD

This invention relates to a steerable drive axle for a motor vehicle.

### BACKGROUND OF THE INVENTION

A drive axle for a motor vehicle commonly includes a rigid tubular housing, a pair of dirigible wheels rotatably supported on the rigid tubular housing at opposite ends thereof, a pair of axle shafts in the rigid tubular housing connected to the dirigible wheels, and a differential in an expanded chamber in the middle of the tubular housing which distributes drive torque from a drive shaft to each of the axle shafts. Such drive axles are referred to as steerable when they further include steering knuckles between the ends of the rigid tubular housing and corresponding ones of the dirigible wheels, a pair of axle shafts with universal joints to transfer the torque while turning, and a steering apparatus which pivots to the steering knuckles in unison about respective ones of a pair of steering axes of the rigid tubular housing. A steering apparatus on a drive axle described in United States Patent 4,592,440, for example, includes a steering assist fluid motor on a cover over the expanded chamber in the middle of the rigid tubular housing of the drive axle. The fluid motor includes a cylinder attached to or integral with the cover and a piston in the cylinder linked to the steering knuckles such that linear translation of the piston in the cylinder induced by differential fluid pressure across the piston effects corresponding pivotal movement in unison of the steering knuckles about the steering axes. A steerable drive axle according to this invention is a novel alternative to the steerable drive axle described in the aforesaid U.S. Patent 4,592,440.

### SUMMARY OF THE INVENTION

This invention is a new and improved steerable drive axle for a motor vehicle according to claim 1, including a rigid tubular housing, a pair of steering knuckles at opposite ends of the rigid tubular housing pivotable about respective ones of a pair of steering axes of the latter, an expanded chamber in the middle of the rigid tubular housing open on one side for access to a differential gear set in the expanded chamber, a differential cover for closing the open side of the expanded chamber, and an electrically-powered steering apparatus integral with the cover linked to the steering knuckles. The electrically-powered steering apparatus includes a rack bar passage in the differential cover, a rack bar supported in the rack bar passage for linear translation in the length direction of the rack bar passage, a pinion head rotatably supported on the differential cover having a pinion gear meshing with a rack gear on the rack bar, an electric motor mounted on the differential cover, and a speed reducer on the differential cover between the pinion head and an output shaft of the electric motor. In a preferred embodiment, the speed reducer consists of a first planetary gear set having an input through a sun gear rotatable as a unit with the output shaft of the electric motor and an output through a planet carrier and a second planetary gear set having an input through a sun gear rotatable as a unit with the planet carrier of the first planetary gear set and an output through a planet carrier rotatable as a unit with the pinion head.

### BRIEF DESCRIPTION OF THE DRAWINGS

Figure 1 is a perspective view of a steerable drive axle according to this invention;

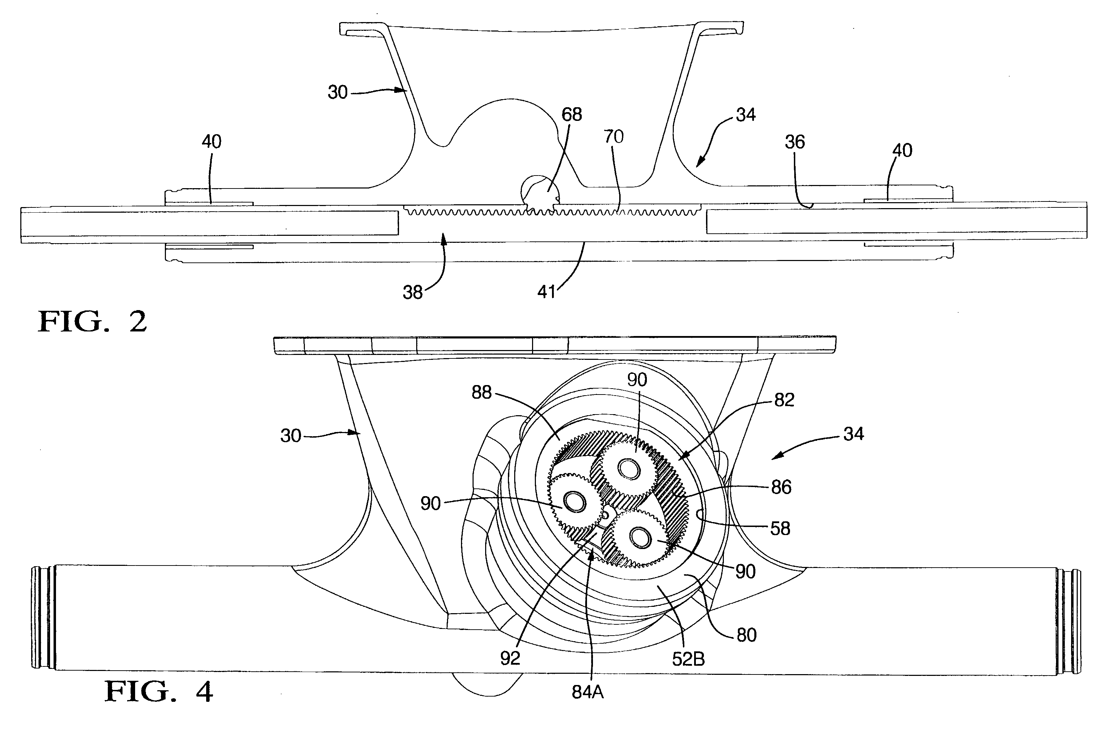

Figure 2 is an enlarged sectional view taken generally along the plane indicated by lines 2-2 in Figure 1;
Figure 3 is an enlarged sectional view taken generally along the plane indicated by lines 3-3 in Figure 1;
Figure 4 is a fragmentary perspective view of a differential cover of the steerable drive axle according to this invention; and
Figure 5 is a fragmentary, exploded perspective view of the differential housing cover of the steerable drive axle according to this invention and of an electrically-powered steering apparatus on the differential cover.

### DESCRIPTION OF THE PREFERRED EMBODIMENT

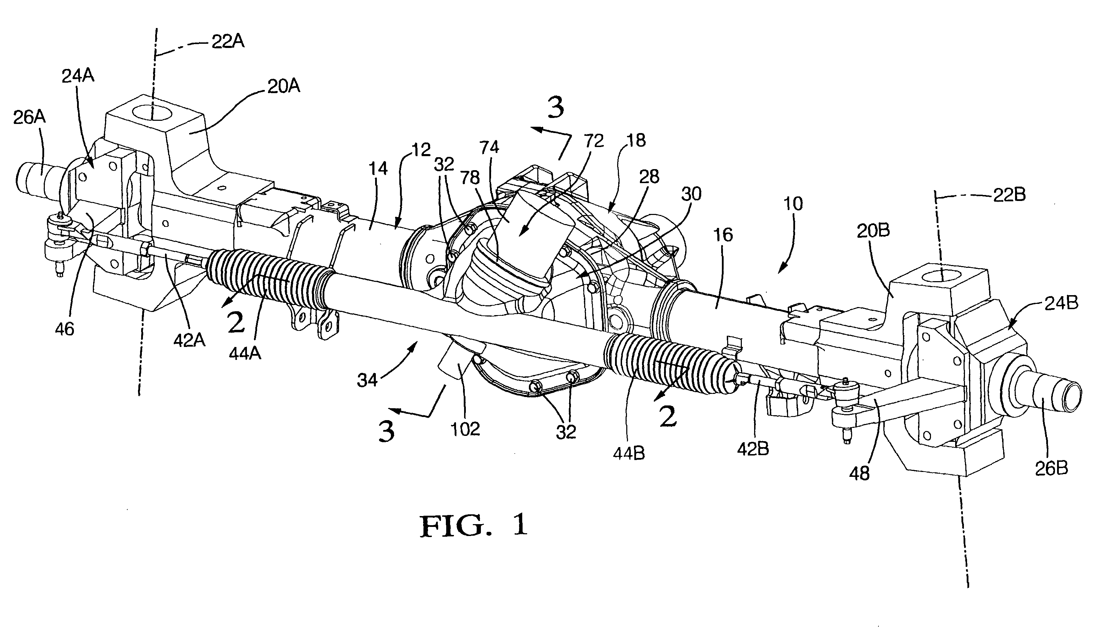

Referring to Figure 1, a steerable drive axle 10 according to this invention for a motor vehicle, not shown, includes a rigid tubular housing 12 consisting of a pair of tubes 14, 16 and a differential carrier 18 between the tubes. A pair of fork-shaped brackets 20A, 20B are rigidly attached to the tubes 14, 16 at outboard ends thereof and define a pair of steering axes 22A, 22B of the rigid tubular housing. A pair of steering knuckles 24A, 24B are supported on the fork-shaped brackets 20A, 20B, respectively, for pivotal movement about respective ones of the pair of steering axes 22A, 22B. A pair of wheel spindles 26A, 26B are rotatably supported on the steering knuckles 24A, 24B, respectively, and a pair of dirigible wheels, not shown, are connected to respective ones of the wheel spindles for rotation as a unit with the latter.

The interior of the differential carrier 18 constitutes an expanded chamber of the rigid tubular housing 12 in which is disposed a differential gear set for distributing torque from an input shaft, not shown, to a pair of axle shafts, not shown, in the tubes 14, 16 connected to respective ones of the wheel spindles 26A, 26B. An open side 28 of the expanded chamber defined by the interior of the differential carrier affords access to the differential gear set therein and is sealed closed by a differential cover 30 rigidly fastened to the differential carrier 18 by a plurality of bolts 32.

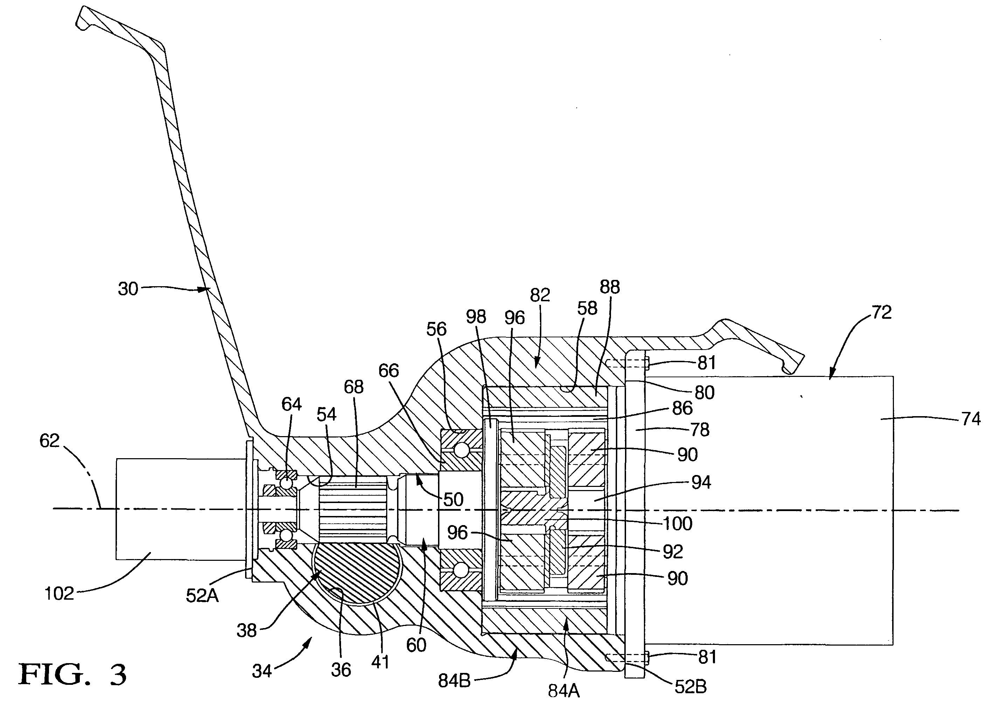

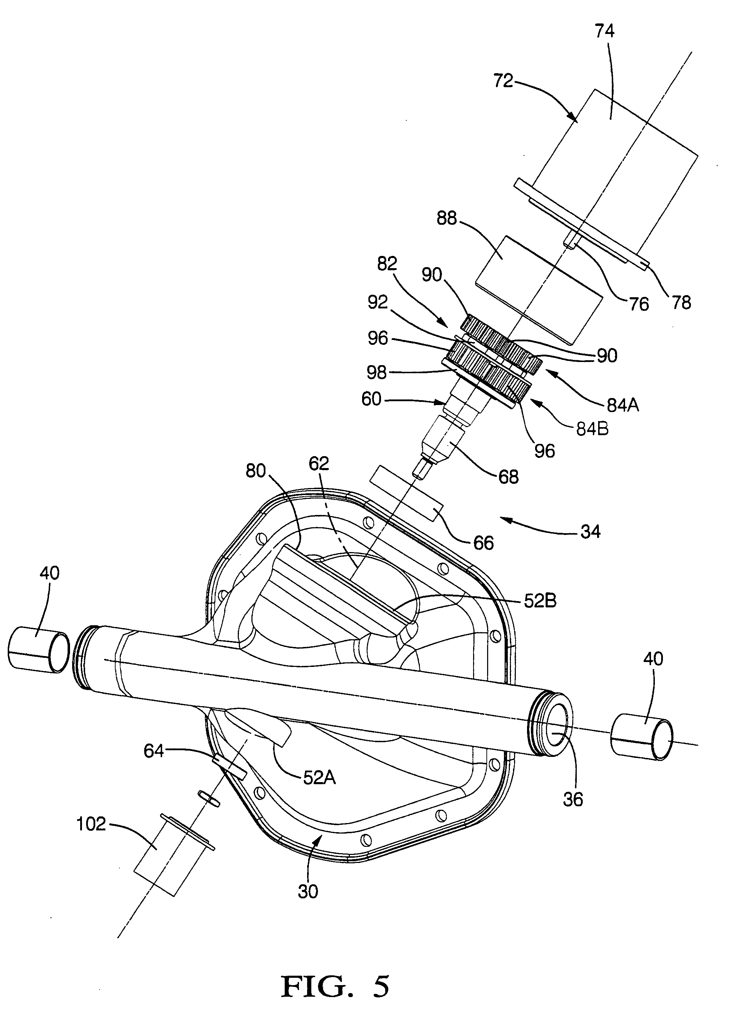

An electrically-powered steering apparatus 34 on the steerable drive axle 10 includes a rack bar passage 36 in the differential cover 30 and a rack bar 38 supported in the rack bar passage by a pair of sleeve bearings 40 for back and forth linear translation in the length direction of the rack bar passage. The sleeve bearings 40 provide a clearance 41 between the rack bar 38 and the rack bar passage 36, illustrated in exaggerated fashion in Figures 3-4, which accommodates resilient flexure of the rack bar in leaf spring fashion between the sleeve bearings. An inboard end, not shown, of each of a pair of tie rods 42A, 42B of the electrically-powered steering apparatus 34 is articulated to a corresponding end of the rack bar 38 and protected against contamination by a corresponding one of a pair of flexible boots 44A, 44B. An outboard end of the tie rod 42A is articulated to a lever arm 46 of the steering knuckle 24A. An outboard end of the tie rod 42B is articulated to a lever arm 48 of the steering knuckle 24B. The tie rods 42A, 42B cooperate with the lever arms 46, 48 in converting back and forth linear translation of the rack bar 38 into pivotal movement in unison of the steering knuckles 24A, 24B about corresponding ones of the steering axes 22A, 22B.

The electrically-powered steering apparatus 34 on the differential cover 30 further includes a stepped bore 50, Figure 3, in the cover between a pair of outside surfaces 52A, 52B of the latter. The stepped bore 50 has a pinion bore portion 54 intersecting the rack bar passage 36, a bearing seat portion 56, and a speed reducer housing portion 58. A pinion head 60 of the electrically-powered steering apparatus 34 is supported in the pinion bore portion 54 of the stepped bore 50 for rotation about a centerline 62 of the stepped bore by a first bearing 64 at one end of the pinion bore portion and a second bearing 66 in the bearing seat portion 56. A schematically-represented pinion gear 68 on the pinion head 60 cooperates with a rack gear 70 on the rack bar 38 in converting rotation of the pinion head about the centerline 62 of the stepped bore into back and forth linear translation of the rack bar in the rack bar passage 36. Flexure of the rack bar 38 in the aforesaid leaf spring fashion between the sleeve bearings 40 resiliently biases the rack gear 70 against the pinion gear 68 to eliminate lash therebetween.

As seen best in Figures 1, 3 and 5, a schematically-represented electric motor 72 of the electrically-powered steering apparatus 34 includes a structural housing 74 and an output shaft 76 rotatable in opposite directions. An annular flange 78 on the structural housing 74 seats against and is rigidly fastened to an annular seat 80 on the outside surface 52B of the differential cover 30 around the speed reducer housing portion 58 of the stepped bore by a plurality of schematically-represented fasteners 81 with the centerline of the motor coincident with the centerline 62 of the stepped bore 50.

A speed reducer 82 of the electrically-powered steering apparatus 34 includes a pair of planetary gear sets 84A, 84B in the speed reducer housing portion 58 of the stepped bore 50 arranged to afford two-stage torque multiplication between the output shaft 76 of the electric motor and the pinion head 60. The planetary gear sets 84A, 84B have a common ring gear 86 formed on an inner surface of a cylindrical sleeve 88 interference fitted in the speed reducer housing portion of the stepped bore. A plurality of planet gears 90 of the planetary set 84A are rotatably supported on a first stage planet carrier 92 and mesh concurrently with the ring gear 86 and a sun gear 94 of the planetary gear set 84A rotatable as unit with the output shaft 76 of the electric motor 72. A plurality of planet gears 96 of the planetary gear set 84B are rotatably supported on a second stage planet carrier 98 rotatable as a unit with the pinion head 60 and mesh concurrently with the ring gear 86 and with a sun gear 100 of the planetary gear set 84B rotatable as unit with planet carrier 92 of the planetary gear set 84A.

In operation, when a control module, not shown, of the motor vehicle turns the electric motor 72 on, torque is transferred from the output shaft 76 of the electric motor to the pinion head 60 through the speed reducer 82 to rotate the pinion head. The pinion gear 68 on the pinion head cooperates with the rack gear 70 on the rack bar 38 to concurrently induce linear translation of the rack bar in the rack bar passage 36 in a direction corresponding to the direction of rotation of the pinion head. The tie rods 42A, 42B cooperate with the lever arms 46, 48 to concurrently pivot the steering knuckles 24A, 24B about the steering axes 22A, 22B whereby the dirigible wheels at the ends of the rigid tubular housing 12 are steered by the electric motor. A position sensor 102 on the outside surface 52A of the differential cover 30 is connected to the pinion head 60 and provides an electronic signal to the aforesaid control module corresponding to the position of the rack bar 38.

## Claims

1. A steerable drive axle (10) for a motor vehicle including a rigid tubular housing (12), an expanded chamber in said rigid tubular housing for a differential gear set having an open side (28) for affording access to said differential gear set, a pair of steering knuckles (24A, 24B) supported on said rigid tubular housing (12) at respective ones of a pair of opposite ends thereof for pivotal movement about respective ones of a pair of steering axes (22A, 22B) of said rigid tubular housing, a differential cover (30) rigidly attached to said rigid tubular housing (12) over said open side (28) of said expanded chamber, a rack bar passage (36) in said differential cover (30), a rack bar (38) having a rack gear (70) thereon supported in said rack bar passage (36) for back and forth linear translation in the length direction of said rack bar passage, a linkage means (42A, 42B) between said rack bar (38) and each of said pair of steering knuckles (24A, 24B) operative in response to linear translation of said rack bar in said rack bar passage to pivot said steering knuckles in unison about corresponding ones of said pair of steering axes (22A, 22B), a pinion head (60) having a pinion gear (68) thereon, an electric motor (72) having a rotatable output shaft (76), and a speed reducer means (82); and means (50, 64, 66, 78, 80, 81) operative to support each of said pinion head (60) and said electric motor (72) and said speed reducer means (82) on said differential cover (30) with said pinion gear (68) meshing with said rack gear (70) so that rotation of said pinion head induces linear translation of said rack bar and with said speed reducer means connected to each of said pinion head and said output shaft of said electric motor for transferring output torque of said electric motor to said pinion head.

2. The steerable drive axle (10) for a motor vehicle recited in claim 1, **characterized by** a pair of sleeve bearings (40) on said differential cover (30) on opposite sides of said pinion gear (68) operative to support said rack bar (38) in said rack bar passage (36) for back and forth linear translation in said rack bar passage with clearance between said rack bar passage and said rack bar to accommodate resilient flexure of said rack bar in leaf spring fashion between said sleeve bearings whereby said rack gear is resiliently biased against said pinion gear.

3. The steerable drive axle (10) for a motor vehicle recited in claim 1, **characterized in that** said speed reducer means includes:
a first planetary gear set (84A) including a first ring gear (86) rigidly attached to said differential cover (30), a plurality of first planet gears (90) rotatably supported on a first planet carrier (92) each meshing with said first ring gear, and a first sun gear (94) rotatable as a unit with said output shaft (76) of said electric motor (72) meshing with each of said first planet gears; and
a second planetary gear set (84B) including a second ring gear (86) rigidly attached to said differential cover (30), a plurality of second planet gears (96) rotatably supported on a second planet carrier (98) rotatable as a unit with said pinion head (60) each meshing with said second ring gear (86), and a second sun gear (100) rotatable as a unit with said first planet carrier (92) meshing with each of said second planet gears (96).

4. The steerable drive axle (10) for a motor vehicle recited in claim 3 **characterized in that** said means operative to support each of said pinion head and said electric motor and said speed reducer means on said differential cover includes:
a stepped bore (50) in said differential cover (30) having a pinion bore portion (54) intersecting said rack bar passage (36) and a speed reducer housing portion (58), said speed reducer (82) being disposed in said speed reducer housing portion (58) of said stepped bore (50),
a pair of anti-friction bearings (64, 66) between said differential cover (30) and said pinion head (60) rotatably supporting said pinion head in said pinion bore portion (54) of said stepped bore (50), and
a flange (78) on a structural housing (74) of said electric motor (72) seated on and rigidly attached to said differential cover (30) at an annular seat (80) on an outside surface of said differential cover around said speed reducing housing portion (58) of said stepped bore (50).

5. The steerable drive axle (10) for a motor vehicle recited in claim 4, **characterized in that** said first ring gear (86) and said second ring gear (86) are each formed on an inner surface of a cylindrical sleeve (88) interference fitted in said speed reducer housing portion (58) of said stepped bore (50) in said differential cover (30).

## Patentansprüche

1. Lenkbare Antriebsachse (10) für ein Kraftfahrzeug mit einem starren röhrenförmigen Gehäuse (12), einer ausgeweiteten Kammer in dem starren röhrenförmigen Gehäuse für einen Differenzialzahnradsatz, die eine offene Seite (28) aufweist, um Zugang zu dem Differenzialzahnradsatz zu ermöglichen, einem Paar Achsschenkeln (24A, 24B), die an dem starren röhrenförmigen Gehäuse (12) an entsprechenden eines Paares gegenüber liegender Enden davon für eine Drehbewegung um entsprechende eines Paares von Lenkachsen (22A, 22B) des starren röhrenförmigen Gehäuses herum gehalten sind, einem Differenzialdeckel (30), der über der offenen Seite (28) der ausgeweiteten Kammer an dem starren röhrenförmigen Gehäuse (12) starr befestigt ist, einem Zahnstangendurchgang (36) in dem Differenzialdeckel (30), einer Zahnstange (38) mit einer Zahnstangenverzahnung (70) daran, die in dem Zahnstangendurchgang (36) für eine lineare Verschiebung hin und her in der Längsrichtung des Zahnstangendurchgangs gehalten ist, Verbindungsmitteln (42A, 42B) zwischen der Zahnstange (38) und jedem von dem Paar von Achsschenkeln (24A, 24B), die in Ansprechen auf die lineare Verschiebung der Zahnstange in dem Zahnstangendurchgang wirksam sind, um die Achsschenkel übereinstimmend um entsprechende des Paares von Lenkachsen (22A, 22B) herum zu drehen, einen Ritzelkopf (60) mit einem Ritzel (68) daran, einem Elektromotor (72) mit einer drehbaren Abtriebswelle (76), und einem Reduktionsgetriebe-Mittel (82), und Mitteln (50, 64, 66, 78, 80, 81), die wirksam sind, um den Ritzelkopf (60), den Elektromotor (72) und das Reduktionsgetriebe-Mittel (82) an dem Differenzialdeckel (30) zu halten, wobei das Ritzel (68) in die Zahnstangenverzahnung (70) eingreift, so dass eine Drehung des Ritzelkopfes eine lineare Verschiebung der Zahnstange bewirkt, und wobei das Reduktionsgetriebe-Mittel mit dem Ritzelkopf und der Abtriebswelle des Elektromotors verbunden ist, um das Abtriebsdrehmoment des Elektromotors auf den Ritzelkopf zu übertragen.

2. Lenkbare Antriebsachse (10) für ein Kraftfahrzeug nach Anspruch 1, **gekennzeichnet durch** ein Paar Gleitlager (40) an dem Differenzialdeckel (30) an gegenüber liegenden Seiten des Ritzels (68), die wirksam sind, um die Zahnstange (38) in dem Zahnstangendurchgang (36) für eine lineare Verschiebung hin und her in dem Zahnstangendurchgang zu halten, wobei zwischen dem Zahnstangendurchgang und der Zahnstange Raum ist, um eine elastische Biegung der Zahnstange in der Art einer Blattfeder zwischen den Gleitlagern aufzunehmen, wodurch die Zahnstangenverzahnung gegen das Ritzel elastisch vorgespannt ist.

3. Lenkbare Antriebsachse (10) für ein Kraftfahrzeug nach Anspruch 1, **dadurch gekennzeichnet, dass**
das Reduktionsgetriebe-Mittel umfasst:
einen ersten Planetenradsatz (84A) mit einem an dem Differenzialdeckel (30) starr befestigten ersten Hohlrad (86), einer Vielzahl erster Planetenräder (90), die an einem ersten Planetenträger (92) drehbar gehalten sind, wobei ein jedes in das erste Hohlrad eingreift, und einem ersten Sonnenrad (94), das als eine Einheit mit der Abtriebswelle (76) des Elektromotors (72) drehbar ist und in jedes der ersten Planetenräder eingreift; und
einen zweiten Planetenradsatz (84B) mit einem an dem Differenzialdeckel (30) starr befestigten zweiten Hohlrad (86), einer Vielzahl zweiter Planetenräder (96), die an einem zweiten Planetenträger (98), der als eine Einheit mit dem Ritzelkopf (60) drehbar ist, drehbar gehalten sind, wobei jedes in das zweite Hohlrad (86) eingreift, und einem zweiten Sonnenrad (100), das als eine Einheit mit dem ersten Planetenträger (92) drehbar ist und in jedes der zweiten Planetenräder (96) eingreift.

4. Lenkbare Antriebsachse (10) für ein Kraftfahrzeug nach Anspruch 3, **dadurch gekennzeichnet, dass**
das Mittel, das wirksam ist, um ein jedes von dem Ritzelkopf, dem Elektromotor und dem Reduktionsgetriebe-Mittel an dem Differenzialdeckel zu halten, umfasst:
eine abgestufte Bohrung (50) in dem Differenzialdeckel (30) mit einem Ritzelbohrungs-Abschnitt (54), der sich mit dem Zahnstangendurchgang (36) überschneidet, und einem Gehäuseabschnitt (58) für das Reduktionsgetriebe, wobei das Reduktionsgetriebe (82) in dem Gehäuseabschnitt (58) für das Reduktionsgetriebe der abgestuften Bohrung (50) angeordnet ist,
ein Paar Wälzlager (64, 66) zwischen dem Differenzialdeckel (30) und dem Ritzelkopf (60), die den Ritzelkopf in dem Ritzelbohrungs-Abschnitt (54) der abgestuften Bohrung (50) drehbar lagern, und einen Flansch (78) an einem Grundgehäuse (74) des Elektromotors (72), der auf den Differenzialdeckel (30) an einem ringförmigen Sitz (80) an der Außenfläche des Differenzialdeckels um den Gehäuseabschnitt (58) für das Reduktionsgetriebe der abgestuften Bohrung (50) herum gesetzt und starr an diesem befestigt ist.

5. Lenkbare Antriebsachse (10) für ein Kraftfahrzeug nach Anspruch 4, **dadurch gekennzeichnet, dass**
das erste Hohlrad (86) und das zweite Hohlrad (86) jeweils an einer Innenfläche einer zylindrischen Hülse (88) ausgebildet sind, die in dem Gehäuseabschnitt (58) für das Reduktionsgetriebe der abgestuften Bohrung (50) in dem Differenzialdeckel (30) über eine Presspassung befestigt ist.

## Revendications

1. Essieu moteur directionnel (10) pour véhicule à moteur, comprenant un boîtier tubulaire rigide (12), une chambre allongée dans ledit boîtier tubulaire rigide pour un ensemble d'engrenages différentiels possédant un côté ouvert (28) permettant d'accéder au dit ensemble d'engrenages différentiels, deux fusées d'essieu (24A, 24B) supportées sur ledit boîtier tubulaire rigide (12) sur les deux extrémités respectives et opposées de celui-ci afin de pivoter autour de deux axes directionnels respectifs (22A, 22B) dudit boîtier tubulaire rigide, un cache différentiel (30) fixé rigidement audit boîtier tubulaire rigide (12), sur ledit côté ouvert (28) de ladite chambre agrandie, un passage (36) de barre de crémaillère dans ledit cache différentiel (30), une barre de crémaillère (38) comportant un engrenage de crémaillère (70) sur elle et supportée dans ledit passage de barre de crémaillère (36) en vue d'une translation linéaire en avant et en arrière dans le sens de la longueur dudit passage de barre de crémaillère, un moyen de liaison (42A, 42B) entre ladite barre de crémaillère (38) et chacune desdites deux fusées d'essieu (24A, 24B) fonctionnant en réponse à la translation linéaire de ladite barre de crémaillère dans ledit passage de barre de crémaillère afin de faire pivoter lesdites fusées d'essieu à l'unisson autour de deux axes directionnels correspondants (22A, 22B), une tête de pignon (60) comportant un engrenage de pignon (68) sur elle, un moteur électrique (72) possédant un arbre de sortie rotatif (76), un moyen réducteur de vitesse (82), et un moyen (50, 64, 66, 78, 80, 81) permettant de supporter ladite tête de pignon (60), ledit moteur électrique (72) et ledit moyen réducteur de vitesse (82) sur ledit cache différentiel (30), ledit engrenage de pignon (68) s'engrenant avec ledit engrenage de crémaillère (70) de sorte que la rotation de ladite tête de pignon induise une translation linéaire de ladite barre de crémaillère, et ledit moyen réducteur de vitesse étant connecté à ladite tête de pignon et au dit arbre de sortie dudit moteur électrique afin de transférer le couple de sortie dudit moteur électrique à ladite tête de pignon.

2. Essieu moteur directionnel (10) pour véhicule à moteur, selon la revendication 1, **caractérisé par** une paire de paliers à coussinets (40) sur ledit cache différentiel (30) sur les côtés opposés dudit engrenage de pignon (68) permettant de supporter ladite barre de crémaillère (38) dans ledit passage de barre de crémaillère (36) en vue d'une translation linéaire en avant et en arrière dans ledit passage de barre de crémaillère avec un jeu entre ledit passage de barre de crémaillère et ladite barre de crémaillère de manière à permettre une flexion résiliente de ladite barre de crémaillère à la manière d'un ressort à lame entre lesdits paliers à coussinets, ce qui permet de pousser de façon résiliente ledit engrenage de crémaillère contre ledit engrenage de pignon.

3. Essieu moteur directionnel (10) pour véhicule à moteur, selon la revendication 1, **caractérisé en ce que** le moyen réducteur de vitesse comprend :
- un premier ensemble d'engrenages planétaires (84A) comprenant un premier engrenage annulaire (86) fixé rigidement audit cache différentiel (30), plusieurs premiers engrenages planétaires (90) supportés en rotation sur un premier support planétaire (92) et s'engrenant chacun avec ledit premier engrenage annulaire, et un premier engrenage solaire (94) tournant d'un seul bloc avec ledit arbre de sortie (76) dudit moteur électrique (72) et s'engrenant avec chacun desdits premiers engrenages planétaires ; et
- un second ensemble d'engrenages planétaires (84B) comprenant un second engrenage annulaire (86) fixé rigidement au dit cache différentiel (30), plusieurs seconds engrenages planétaires (96) supportés en rotation sur un second support planétaire (98). tournant d'un seul bloc avec ladite tête de pignon (60) et s'engrenant chacun avec ledit second engrenage annulaire (86), et un second engrenage solaire (100) tournant d'un seul bloc avec ledit premier support planétaire (92) et s'engrenant avec chacun desdits seconds engrenages planétaires (96).

4. Essieu moteur directionnel (10) pour véhicule à moteur, selon la revendication 3, **caractérisé en ce que** ledit moyen permettant de supporter ladite tête de pignon, ledit moteur électrique et ledit moyen réducteur de vitesse sur ledit cache différentiel comprend :
- un alésage étagé (50) dans ledit cache différentiel (30), comprenant une partie d'alésage pour pignon (54) entrant en intersection avec le passage de la barre de crémaillère (36), et une partie boîtier de réducteur de vitesse (58), ledit réducteur de vitesse (82) étant disposé dans ladite partie boîtier de réducteur de vitesse (58) dudit alésage étagé (50) ;
- une paire de paliers anti-frottement (64, 66) entre ledit cache différentiel (30) et ladite tête de pignon (60), supportant en rotation ladite tête de pignon dans ladite partie d'alésage pour pignon (54) dudit alésage étagé (50) ; et
- un flanc (78) sur un boîtier structurel (74) dudit moteur électrique (72), reposant sur ledit cache différentiel (30) et connecté rigidement à celui-ci au niveau d'un siège annulaire (80) sur une surface externe dudit cache différentiel autour de ladite partie boîtier de réducteur de vitesse (58) dudit alésage étagé (50).

5. Essieu moteur directionnel (10) pour véhicule à moteur, selon la revendication 4, **caractérisé en ce que** ledit premier engrenage annulaire (86) et ledit second engrenage annulaire (86) sont chacun formés sur une surface interne d'un manchon cylindrique (88) ajusté avec serrage dans ladite partie boîtier de réducteur de vitesse (58) dudit alésage étagé (50) dans ledit cache différentiel (30).
